# EUROPEAN PATENT APPLICATION

(11) **EP 2 058 887 A1**
(43) Date of publication of application: **13.05.2009**
(21) Application number: 07806178.5
(22) Date of filing: 22.08.2007
(51) Int. Cl.: H01M 8/04, B65D 1/32, B65D 77/04

(54) **FUEL BOTTLE FOR FUEL CELL AND FUEL CARTRIDGE EMPLOYING IT**

(30) Priority: 23.08.2006 JP 2006226068; 23.08.2006 JP 2006226069
(71) Applicant: Toyo Seikan Kaisha, Ltd., Tokyo 100-8522 (JP); Kabushiki Kaisha Toshiba, Minato-ku, Tokyo 105-8001 (JP)
(72) Inventor: TANAKA, Kenjirou, Yokohama-shi Kanagawa 230-0001 (JP); TANAKA, Masayoshi, Yokohama-shi Kanagawa 230-0001 (JP); NARUTAKI, Kouichi, Yokohama-shi Kanagawa 210-0001 (JP); ANDOH, Kenji, Yokohama-shi Kanagawa 210-0001 (JP); TAKAHASHI, Kenichi, Yokohama-shi Kanagawa 235-8522 (JP)
(74) Representative: Jönsson, Hans-Peter
(86) International application number: PCT/JP2007/066701
(87) International publication number: WO 2008/023825

(57) **Abstract**

A fuel bottle 10 for a fuel cell having a bottle main body 12 for containing fuel for a fuel cell and comprising a nozzle portion 11 at the tip portion of the bottle main body 12 on which a coupler for connecting with a main body of a fuel cell can be attached and a trunk portion having a generally elliptic shape in cross section and having been formed by blow molding. In this bottle 10, length L1 in one direction of minor axis from the center On of the nozzle portion of the elliptic shape in cross section differs from length L2 in the other direction of the minor axis from the center On of the nozzle portion. By this structure, a moving space of a push button when the fuel bottle 10 is housed in a hard case can be secured while necessary capacity of the fuel bottle 10 is secured. Pinch portions 13 and 14 are formed in lowly stretched portions of the bottle main body 12 in a manner to protrude outwardly whereby contact areas of the pinch portions 13 and 14 are increased and contact strength thereby is improved.

## Description

### Technical Field

This invention relates to a fuel bottle for a fuel cell and a fuel cartridge using the same which can achieve a shape, capacity and strength adapted for containing methanol fuel for a methanol fuel cell and for housing the bottle in a hard case and being capable of flowing out methanol fuel by pushing a push button and adapted also for forming the bottle by blow molding.

### Background Art

Various liquid type fuel cells capable of generating electric current directly from liquid fuel have recently been developed. A direct methanol fuel cell (DMFC) using methanol as fuel has attracted attention as a power source of mobile type electronic devices, for it does not need a reformer and therefore can be made in a compact design.

In a direct methanol fuel cell (DMFC) called a passive system, in particular, methanol which is a liquid fuel is supplied directly by coupling a fuel cartridge containing methanol to a fuel tank provided on the main body of a fuel cell whereby a pump for supplying fuel can be obviated and the fuel cell can be made in a further compact design (see Japanese Patent Application Laid-open Publication No. 2005-71713).

For such direct methanol fuel cell (DMFC), there is used a fuel cartridge in which methanol which is fuel is contained in an inner container in the form of a contractible bottle which is covered and protected by an outer container made of a hard case.

### Summary of the Invention

In such fuel cartridge in which a bottle containing methanol fuel for a fuel cell is covered by a hard case, as a method for causing the bottle to contract to enable methanol to flow out, a push button is provided on the outer hard case for causing the bottle to contract. In this case, however, there arises the problems that the hard case must have a space for moving the push button and that the inside container must have sufficient shape, capacity and formability.

In view of such problems of the prior art, it is an object of the invention to provide a fuel bottle for a fuel cell which can be housed efficiently in a hard case and can also secure necessary capacity and formability as well as a fuel cartridge using this fuel bottle.

On the other hand, in such a fuel cartridge in which a bottle containing methanol fuel is covered by a hard case, since the blow molded bottle is contracted to cause methanol to flow out, the bottle per se is required to have contractibility and squeezability and hence a bottle having a relatively small wall thickness is used.

Since, however, methanol has a low boiling point, in a situation in which, for example, a fuel cartridge is placed in a car, inner pressure of the bottle increases due to temperature of the environment and, therefore, sufficient strength of the bottle must be secured even in a case where the inner pressure of the bottle increases.

In view of such problem of the prior art, it is another object of the invention to provide a fuel bottle for a fuel cell in which sufficient strength such as pressure-proof property can be secured in a case where inner pressure of the bottle increases due to temperature of the environment and a fuel cartridge using such fuel bottle.

For solving these problems of the prior art, in the first aspect of the invention, there is provided a fuel bottle for a fuel cell having a bottle main body for containing fuel for a fuel cell and comprising a nozzle portion at the tip portion of the bottle main body on which a coupler for connecting with a main body of a fuel cell can be attached and a trunk portion having a generally elliptic shape in cross section and having been formed by blow molding characterized in that length in one direction of minor axis from the center of the nozzle portion of the elliptic shape in cross section of the trunk portion of the bottle main body differs from length in the other direction of the minor axis from the center of the nozzle portion.

According to this fuel bottle for a fuel cell, the bottle has a bottle main body for containing fuel for a fuel cell and comprises a nozzle portion at the tip portion of the bottle main body on which a coupler for connecting with a main body of a fuel cell can be attached and a trunk portion having a generally elliptic shape in cross section and has been formed by blow molding. Since in this bottle length in one direction of minor axis from the center of the nozzle portion of the elliptic shape in cross section of the trunk portion of the bottle main body differs from length in the other direction of the minor axis from the center of the nozzle portion, by changing the length of minor axis from the center of the nozzle portion of the bottle of the ellipse shape and thereby shifting the center of the nozzle portion from the center of the trunk portion, space for moving a push button can be secured while the bottle can be housed in a hard case with a necessary capacity being sufficiently provided.

In the second aspect of the invention, there is provided a fuel bottle for a fuel cell as defined in the first aspect wherein parting lines at both ends on the side of line of apsides of the elliptic shape of the bottle main body and a pinch portion on the bottom of the bottle main body are disposed substantially at the center of the minor axis offset from the center of the nozzle portion.

According to this fuel bottle for a fuel cell, since parting lines at both ends on the side of line of apsides of the elliptic shape of the bottle main body and a pinch portion on the bottom of the bottle main body are disposed substantially at the center of the minor axis offset from the center of the nozzle portion, the blow ratio in the direction of the minor axis of the bottle main body other than the nozzle portion can be made substantially uniform whereby strength as a bottle can be secured relatively easily.

In the third aspect of the invention, there is provided a fuel bottle for a fuel cell as defined in the first or second aspect wherein an outwardly protruding projection is formed on the shorter length side from the center of the nozzle portion of the minor axis of the bottle main body.

According to this fuel bottle for a fuel cell, since an outwardly protruding projection is formed on the shorter length side from the center of the nozzle portion of the minor axis of the bottle main body, a further capacity can be easily secured.

In the fourth aspect of the invention, there is provided a fuel cartridge for a fuel cell comprising a hard case provided with a push button which can house a fuel bottle as defined in the first aspect and can enable fuel for a fuel cell to flow out by pushing, with the push button, a surface of the fuel bottle on the shorter length side from the center of the nozzle portion.

According to this fuel cartridge for a fuel cell, since fuel cartridge comprises a hard case provided with a push button which can house a fuel bottle as defined in the first aspect and can enable fuel for a fuel cell to flow out by pushing, with the push button, a surface of the fuel bottle on the shorter length side from the center of the nozzle portion, by pushing the surface of the fuel bottle on the shorter length side from the center of the nozzle portion with the push button, the bottle can be housed efficiently in the hard case and necessary capacity and formability can be secured.

In the fifth aspect of the invention, there is provided a fuel bottle for a fuel cell as defined in the first aspect wherein a pinch portion is formed in a lowly stretched portion of the bottle main body in a manner to protrude outwardly.

According to this fuel bottle for a fuel cell, there is provided a fuel bottle for a fuel cell having a bottle main body for containing fuel for a fuel cell and comprising a nozzle portion at the tip portion of the bottle main body on which a coupler for connecting with a main body of a fuel cell can be attached and a trunk portion having been formed by blow molding wherein a pinch portion is formed in a manner to protrude outwardly and, since the pinch portion which has a notch in a lowly stretched portion of a parison such as the bottom and shoulder portions of the bottle main body is formed in a manner to protrude outwardly, a closely contacting portion is increased and contacting strength thereby is improved.

By this arrangement, since the bottle is used in the state in which it is housed in the hard case, the shape of the pinch portion does not adversely affect self-supporting property of the bottle and strength of the bottle can thereby be improved.

In the sixth aspect of the invention, there is provided a fuel bottle for a fuel cell as defined in the fifth aspect wherein the outwardly protruding pinch portion is bent toward the bottle main body.

According to this fuel bottle for a fuel cell, the outwardly protruding pinch portion is bent toward the bottle main body and, therefore, a closely contacting portion is further increased and strength thereby can be further improved.

In the seventh aspect of the invention, there is provided a fuel cartridge for a fuel comprising a hard case provided with a push button and a rib formed on an inside surface of the hard case which can house a fuel bottle as defined in the fifth aspect in such a manner that at least the pinch portion or a portion in the vicinity of the pinch portion of the fuel bottle is pressed by the rib of the hard case.

According to this fuel cartridge for a fuel cell, the fuel cartridge comprises a hard case provided with a push button and a rib formed on an inside surface of the hard case which can house a fuel bottle as defined in any of the first to the third aspects in such a manner that the pinch portion and a portion in the vicinity of the pinch portion, or either the pinch portion or the portion in the vicinity of the pinch portion of the fuel bottle is pressed by the rib of the hard case and, therefore, the bottle is housed in such a manner that the outwardly projecting pinch portion or the portion in the vicinity of such pinch portion, or the outwardly protruding pinch portion which is bent toward the bottle main body or the portion in the vicinity of such pinch portion is pressed by the rib of the hard case and, as a result, deformation of the bottle can be prevented and deformation and opening of the pinch portion thereby can be prevented even in a case where inner pressure of the bottle is increased. Further, by pressing by the rib, close contact can further be improved and strength thereby can be improved.

In the eighth aspect of the invention, there is provided a fuel cartridge for a fuel comprising a hard case provided with a push button and a rib formed on an inside surface of the hard case which can house a fuel bottle as defined in any of the first to third aspect in such a manner that at least the pinch portion or a portion in the vicinity of the pinch portion of the fuel bottle is clamped by the rib of the hard case.

According to this fuel cartridge for a fuel cell, the fuel cartridge comprises a hard case provided with a push button and a rib formed on an inside surface of the hard case which can house a fuel bottle as defined in the fifth aspect in such a manner that the pinch portion and the portion in the vicinity of such pinch portion, or the pinch portion or the portion in the vicinity of such pinch portion of the fuel body is pressed by the rib and the outwardly protruding pinch portion or the portion in the vicinity of such pinch portion, or the pinch portion which is bent toward the bottle main body or the portion in the vicinity of such pinch portion is clamped by the rib of the hard case and, therefore, the bottle is housed in such a manner that deformation of the bottle can be prevented and deformation and opening of the pinch portion can thereby be prevented even when inner pressure of the bottle is increased. Further, by clamping the pinch portion by the rib, close contact can further be increased and strength can thereby be improved.

In the ninth aspect of the invention, there is provided a fuel bottle as defined in the first or second aspect which is formed to have at least one layer of a cyclic olefin (COC) resin.

According to this fuel bottle, the fuel bottle is formed to have at least one layer of a cyclic olefin (COC) resin and, by this structure, a bottle having restricted permeability to methanol can be provided.

### Brief Description of the Drawings

FIG. 1 is a front view, a plan view and a side view of an embodiment of a fuel bottle for a fuel cell made according to the invention.
FIG. 2 is a front view and a sectional view of an embodiment of a fuel cartridge using a fuel bottle for a fuel cell of the invention.
FIG. 3 is a sectional view of a blow mold used for molding of the fuel bottle for a fuel cell of the invention.
FIG. 4 is a front view, a plan view and a side view of another embodiment of a fuel bottle for a fuel cell made according to the invention.
FIG. 5 is a front view, a plan view, a bottom view, a side view and partially enlarged views of the side view of another embodiment of a fuel bottle for a fuel cell made according to the invention.
FIG. 6 is a sectional view of a blow mold used for molding the fuel bottle for a fuel cell of this embodiment.
FIG. 7 is a front view and partially enlarged views of the front view of the inside of an embodiment of a fuel cartridge using the fuel bottle for a fuel cell of this embodiment.
FIG. 8 is a front view, a plan view, a side view and a bottom view of still another embodiment of a fuel bottle of the invention.

### Description of Preferred Embodiments

Embodiments of the present invention will now be described in detail with reference to the accompanying drawings.

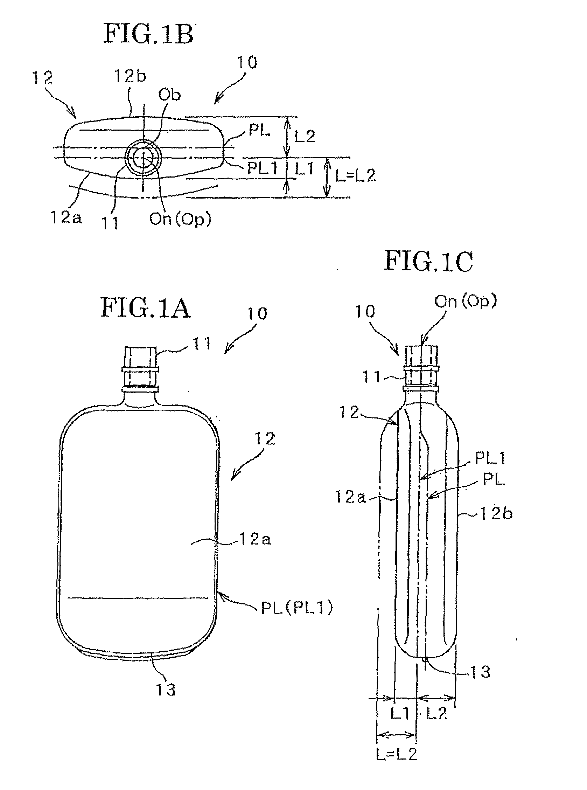

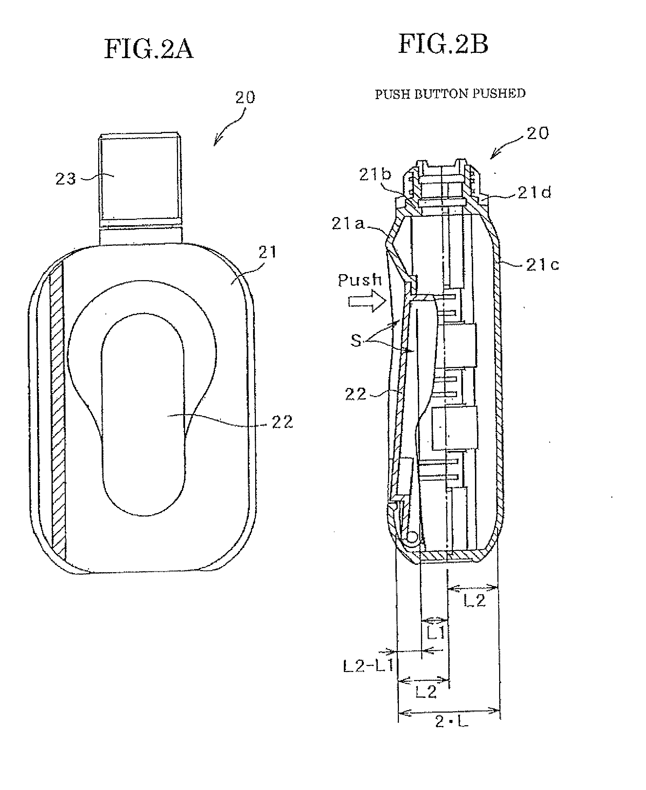

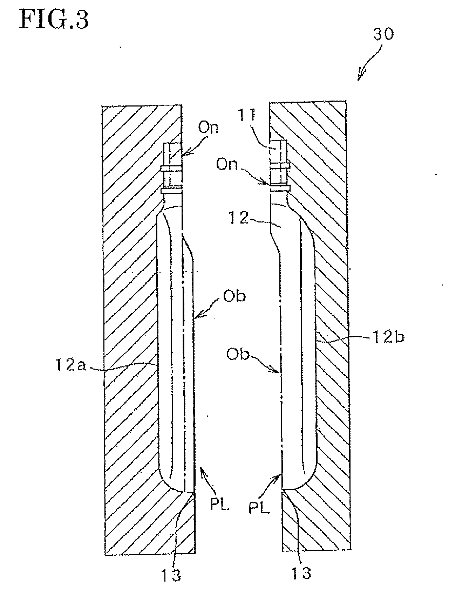

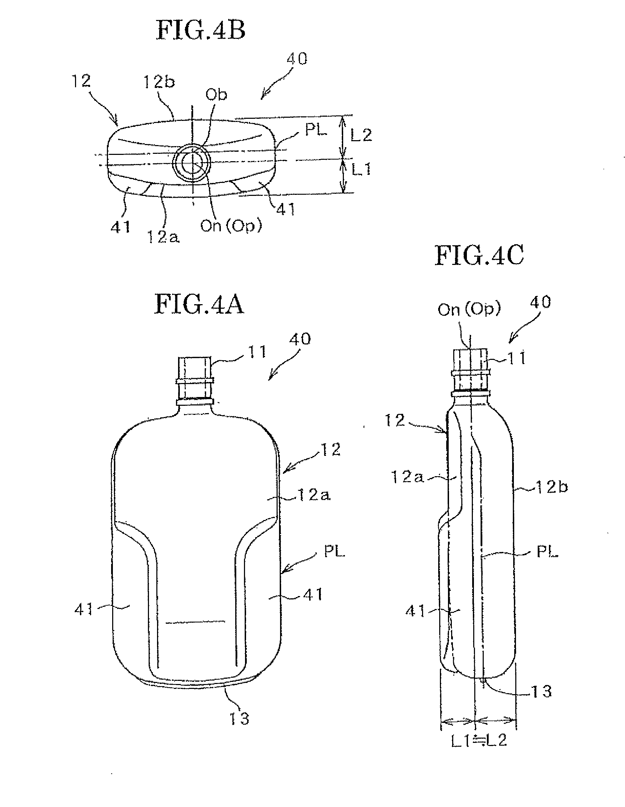

FIG. 1 shows a front view, a plan view and a side view of an embodiment of a fuel bottle for a fuel cell of the present invention. FIG. 2 shows a front view and a sectional view of an embodiment of a fuel cartridge of the invention using the fuel bottle for a fuel cell. FIG. 3 shows a sectional view of a blow mold used for molding the fuel bottle for a fuel cell of the invention and FIG. 4 shows a front view, a plan view and a side view of another embodiment of a fuel bottle for a fuel cell of the invention.

A fuel bottle 10 for a fuel cell is a fuel bottle for containing methanol for a passive type fuel cell according to which fuel is directly supplied to a fuel tank of a fuel cell main body of a direct methanol fuel cell (DMFC) using methanol as its fuel.

This fuel bottle 10 is formed, as shown in FIG. 1, is made of plastic having contractibility and is formed by blow molding and is used for containing methanol. The bottle 10 has a nozzle portion 11 at the tip portion and is formed in a generally flat bottle shape having a bottle main body 12 which has a generally elliptic shape in cross section.

In the cross sectional plane of the elliptic shape of the bottle main body constituting a trunk portion of this fuel bottle 10, length L1 in one direction from the center On of the nozzle portion 11 of minor axis passing through the center On of the nozzle portion 11 which constitutes the center of a parison in blow molding differs from length L2 in the other direction of the minor axis from the center On of the nozzle portion 11. Accordingly, the center On of the nozzle portion 11 is offset from center Ob of the bottle main body 12 and the length L1 to a front surface 12a is short and the length L2 to a rear surface 12b is long.

By this arrangement, when this fuel bottle 10 is housed in a hard case 21 of a fuel cartridge 22 shown in FIG. 2 in which distances from the center of the nozzle portion 11 to a front surface and a rear surface are set at 2 · L = 2 · L2, space S which is equivalent to L2 - L1 can be secured on the side of the front surface 12a of the bottle main body 12 and this space S can be used as space for moving a push button 22 therein.

For making this fuel bottle 10 by blow molding, blow molding is normally performed in such a manner that the center of the parison coincides with the center On of the nozzle and parting lines PL of the blow mold and pinch portion 13 at the bottom of the bottle main body 12 are aligned with the center of the parison.

If the fuel bottle 10 is formed by using such ordinary type of blow molding, the blow ratio of the front and rear surfaces 12a and 12b from the nozzle center On becomes different from each other due to difference in the lengths L1 and L2 and, as a result, uniform strength of the bottle main body 12 as a whole cannot be achieved.

For this reason, in this fuel bottle 10, as shown in FIG. 3, the bottle 10 is formed in such a manner that the parting lines PL of a pair of blow mold 30 for the bottle main body 12 are disposed substantially at the center of the minor axis of the elliptic shape and at both ends on the line of apsides of the elliptic shape. Likewise, the pinch portion 13 at the bottom of the bottle main body 12 is disposed at the center of the bottom of the bottle center Ob.

By such parting lines PL and the pinch portion 13 at the bottom of the bottle main body 12, notwithstanding that the bottle 10 has the nozzle center On offset from the bottle main body center Ob, the blow ratio of the front and rear surfaces 12a and 12b can be made substantially uniform and uniform stretching can thereby be achieved and strength can be made uniform.

The fuel bottle 10 must be able not only to contain methanol in the bottle but also to have contractibility and squeezability for pushing out methanol from the bottle and also to have restricted permeability to methanol. For this reason, the fuel bottle 10 should preferably have at least one layer of cyclic olefin resin as a synthetic resin material to be used. For example, the fuel bottle 10 may be made of a single layer of cyclic olefin resin or may be made of plural layers having an inner layer and an intermediate layer made respectively of cyclic olefin resin. As other resin layers of such fuel bottle made of plural layers, layers made of polyolefin (PO) resin, polyester resin, polylactic acid (PLA) resin and polybutylene succinate (PBS) resin can be advantageously used. As an adhesive resin layer for a multi-layer structure, linear chain low density polyethylene (LLDPE) or an acid modified polyolefin resin may be advantageously used.

An unillustrated coupler which can be detachably coupled to the main body side of a fuel cell is attached to the nozzle portion 11 projecting at the upper end portion of the fuel bottle 10.

As this coupler, a coupler having a plug and a socket which constitute a pair of engaging projection and engaging recess and can be attached and detached by a single action may be used. For example, there may be used a coupler which comprises a plug constituting an engaging projection which is provided on the fuel bottle side and is attached to the nozzle portion 11, a socket constituting an engaging recess which is provided on the side of the main body of the fuel cell, and a valve energized by a spring or the like provided respectively as a valve mechanism in the plug and the socket. When the socket and the plug are mounted and connected, they communicate with each other to enable fuel to flow and when they are separated and disengaged, they are closed.

Such fuel bottle 10 made of plastic is housed in a hard case which has sufficient rigidity to form an outer container accommodating the fuel bottle 10 inside and can be pressed from outside to press the fuel bottle to contract and thereby cause methanol fuel to flow out whereby a fuel cartridge 20 for a fuel cell is constructed.

A hard case 21 of this fuel cartridge 20 is divided into a front member and a rear member as shown in FIG. 2 to receive the fuel bottle 10 therein. The front member 21a is provided with a push button 22. The push button 22 can be pushed and pivoted inwardly with the lower portion of the push button 22 being used as a pivot. In this hard case 21, a projecting outer nozzle portion 21b which can cover the nozzle portion 11 of the fuel bottle 10 is formed in such a manner that it is divided in the front member 21a and the rear member 21c. An outer nozzle 21d is screwed onto a threaded portion in the outer periphery of the outer nozzle portion 21b to connect the divided front and rear portions of the outer nozzle portion 21b together and cover the nozzle portion 11 of the fuel bottle 10 to protect it and, further, to put a cap 23 for sealing the fuel bottle 10.

Accordingly, in this fuel cartridge 20, by placing the fuel bottle 10 in the hard case 21 in such a manner that the front surface 12a which is less bulged is disposed to the side of the push button 22 and joining and closing the divided front member 21a and rear member 21c together, and then screwing the outer nozzle 21d and screwing the cap 23, substantially the entire portion of the fuel bottle 10 can be housed and sealed in the fuel cartridge 20 and the moving space S for the push button 22 can be secured.

By removing the cap 23 from the sealed state of the fuel cartridge 20, the plug only of the coupler can be exposed and thereby can be connected to the main body side of the fuel cell. By connecting the plug to the socket of the main body of the fuel cell in this state and then pushing the push button 22 of the hard case 21, the front surface 12a of the trunk portion of the bottle main body 12 of the fuel bottle 10 housed inside is pressed and, as a result, methanol fuel can flow out of the fuel bottle 10 to be supplied to the main body of the fuel cell.

In the hard case 21 of the fuel cartridge 20, the push button 22 is disposed in the central portion of the front member 21a and there is space on both sides of the push button 22.

Therefore, there may be provided a fuel bottle 40 which has an increased capacity by utilizing the space on both sides of the push button 22 of the hard case 21.

This fuel bottle 40 having an increased capacity has, as shown in FIG. 4 for example, outwardly protruding portions 41 on both sides of the front surface 12a of the bottle main body 12.

By this fuel bottle 40, moving space S for the push button 22 can be secured in the fuel cartridge 20 and, as compared with the fuel bottle 10, capacity for containing methanol can be increased by the capacity of the protruding portions 41 on both sides.

The size of the protruding portions 41 may be set, for example, to a state in which lengths L1 and L2 from the nozzle center On become almost equal to each other (L1≒L2) at which the nozzle center On substantially coincides with the center Ob of the bottle main body 12. In other words, the bottle 40 has a shape similar to an ordinary flat bottle which has a generally elliptic shape in cross section but only a portion in which the push button 22 is located is recessed.

According to this fuel bottle 40 for a fuel cell, when the fuel bottle 40 is housed in the hard case 21 of the fuel cartridge 20, the moving space S for the push button 22 can be secured between the protruding portions 41. As the fuel bottle 40. the capacity of the fuel bottle 40 can be increased to the maximum by the protruding portions 41 on both sides by effectively utilizing the interior space of the hard case 21.

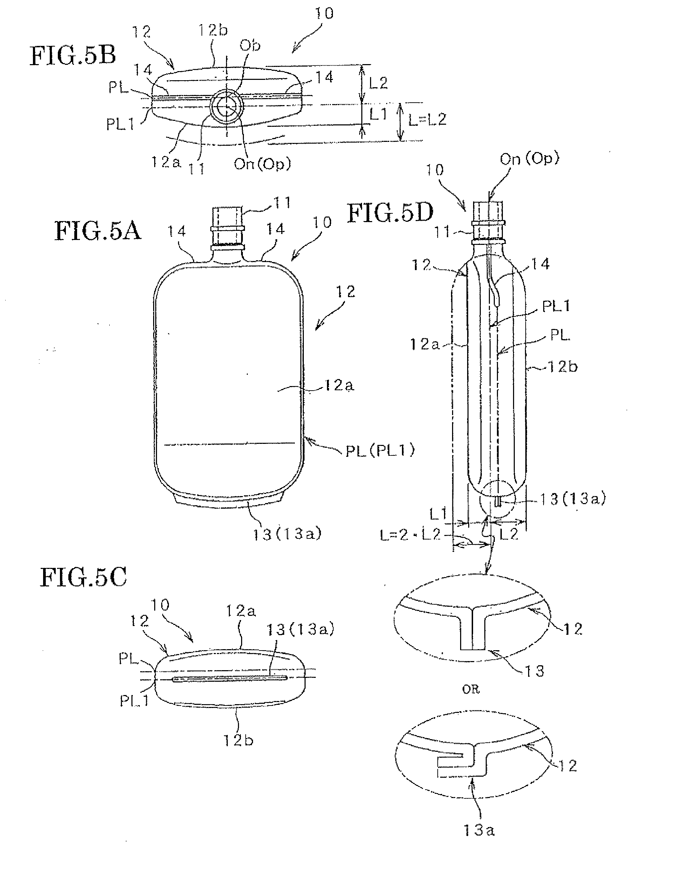

With reference to FIGs. 5 to 8, another embodiment of the present invention will now be described. This embodiment relates to a fuel bottle which can achieve necessary pressure-proof strength in a case where inner pressure of the bottle has increased.

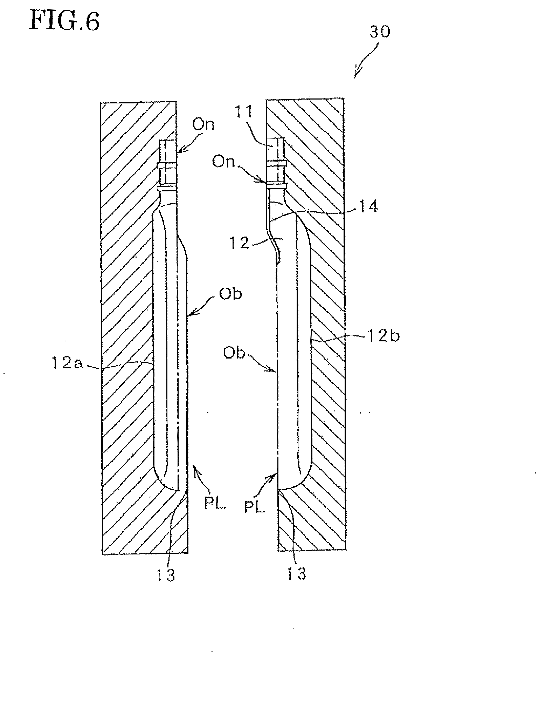

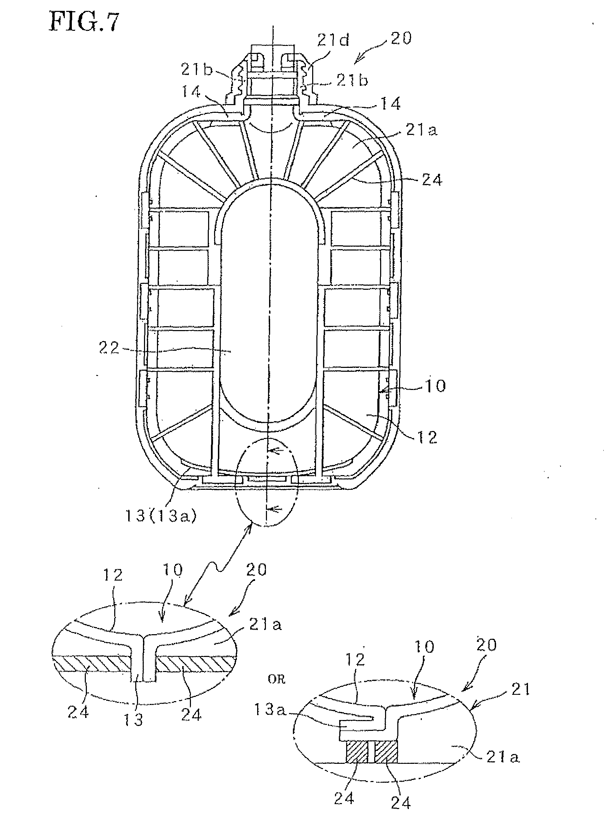

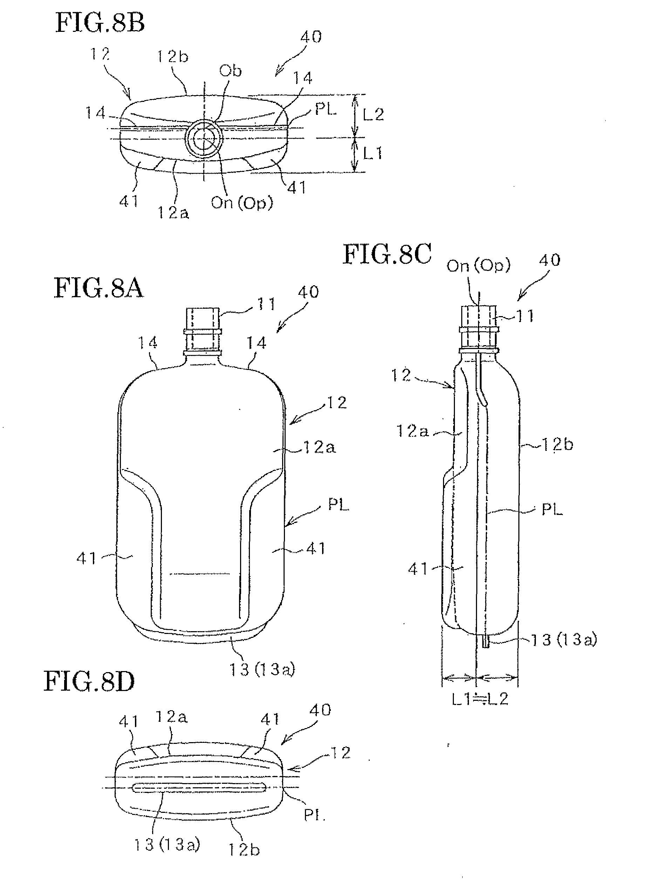

FIG. 5 shows a front view, a plan view, a bottom view, a side view and partially enlarged views of the other embodiment of the fuel bottle for a fuel cell of the present invention. FIG. 6 is a sectional view of a blow mold used for molding the fuel bottle for a fuel cell of this embodiment. FIG. 7 is a front view and partially enlarged views of the front view of an embodiment of the inside of a fuel cartridge using the fuel bottle for a fuel cell of this embodiment. FIG. 8 is a front view, a plan view, a side view and a bottom view of still another embodiment of the invention.

In the embodiments to be described below, the same components as those of FIGs. 1 - 4 will be designated by the same reference characters and description thereof will be omitted.

Since this fuel bottle 10 is housed in a hard case and is used as a fuel cartridge, a bottle main body 12 is not required to have self-supporting property. On the other hand, when the bottle 10 containing methanol is placed in a location such as a car where environmental temperature increases, inner pressure of the bottle main body 12 sometimes rises due to evaporation of methanol because the boiling point of methanol is relatively low. A portion of the bottle which poses the most serious problem for securing strength against such increase in the inner pressure is a lowly stretched portion of a parison in blow molding. As such lowly stretched portion can be cited a bottom portion and a shoulder portion of the bottle main body 12.

In this fuel bottle 10, therefore, as shown in the enlarged view of FIG. 5, a pinch portion 13 is formed in a manner to protrude outwardly from the bottle main body 12 and the length of the pinch portion 13 is made sufficiently large to increase area of contact of the pinch portion 13.

Alternatively, after blow molding a pinch portion 13 at the bottom of the bottle main body 12, as shown in the enlarged view of FIG. 5, the pinch portion may be bent toward the bottle main body 12 to form a pinch portion 13a. By this structure, close contact of the pinch portion 13a can be further improved and pressure-proof property can be further improved. As regards a pinch portion 14 at the shoulder portion of the bottle main body 12, the same structure may be applied to increase close contact of the pinch portion and improve pressure-proof property of the pinch portion.

In FIG. 2, the fuel bottle 10 housed in the hard case 21 is used as the fuel cartridge 20. For increasing rigidity and strength of the hard case 21, as shown in FIG. 7, a plurality of ribs 24 are provided by utilizing an inner space of the front member 21a of the hard case 21.

By this arrangement, rigidity of the fuel cartridge 21 is improved and deformation of the bottle due to increase in the inner pressure of the bottle can be prevented.

In this fuel cartridge 20, for increasing rigidity and strength of the hard case 21 and also increasing pressure-proof property of the pinch portions 13 and 13a of the fuel bottle 10 against the inner pressure, as shown in the enlarged view of FIG. 7, the pinch portion 13 is clamped on both sides with the inner ribs 24 of the front member 21a of the hard case 21, or the pinch portion 13a bent toward the bottle main body 12 is pressed upwardly with the ribs 24 at the bottom of the hard case 21.

By clamping the outwardly protruding pinch portion 13 of the fuel bottle 10 on both sides, or pressing upwardly the pinch portion 13a which protrudes outwardly and is bent toward the bottle main body 12 and thereby substantially holding the pinch portion 13a in a vertical direction with the entire fuel bottle 10 which is held in its upper portion in the nozzle portion 11, these pinch portions 13 and 13a are mechanically pressed to further increase strength against the inner pressure. As to the pinch portion 14 formed in the shoulder portion of the bottle main body 12, the pinch portion 14 can be clamped with ribs formed in a corresponding shoulder portion of the hard case 21 whereby strength against the inner pressure can further be improved.

A portion which is pressed with ribs of the hard case 21 of the fuel cartridge 20 is not limited to the pinch portions 13 and 13a but it may be portions in the vicinity of these pinch portions. Alternatively, both of the pinch portion and a portion in the vicinity of the pinch portion may be pressed to increase contact strength and prevent opening of the pinch portion.

On the other hand, in the hard case 21 of the fuel cartridge 20, the push button 22 is disposed in the central portion of the front member 21a and there is space on both sides of the push button 22.

Accordingly, there may be used a fuel bottle 40 in which capacity is increased by utilizing the space on both sides of the push button 22 of the hard case 21. Description will now be made about this fuel bottle by designating the same components as those of the fuel bottle 10 by the same reference characters.

In this fuel bottle 40 with increased capacity, as shown in FIG. 8 for example, protruding portions 41 which protrude outwardly from both sides of a front surface 12a of a bottle main body 12 of the fuel bottle are formed.

By this fuel bottle 40, in a fuel cartridge 20, moving space S for a push button 22 can be secured and capacity for containing methanol can be increased by the protruding portions 41 on both sides as compared with the fuel bottle 10.

The size of the protruding portions 41 may be set, for example, to a state in which lengths L1 and L2 from the nozzle center On become almost equal to each other (L1≒L2) at which the nozzle center On substantially coincides with the center Ob of the bottle main body 12. In other words, the bottle 40 has a shape similar to an ordinary flat bottle which has a generally elliptic shape in cross section but only a portion in which the push button 22 is located is recessed.

According to this fuel bottle 40 for a fuel cell, when the fuel bottle 40 is housed in the hard case 21 of the fuel cartridge 20, the moving space S for the push button 22 can be secured between the protruding portions 41. As the fuel bottle 40. the capacity of the fuel bottle 40 can be increased to the maximum by the protruding portions 41 on both sides by effectively utilizing the interior space of the hard case 21.

In this fuel bottle 40 also, in the same manner as in the fuel bottle 10 which has already been described, the pinch portions 13, 13a and 14 may be formed in a manner to protrude outwardly and pressure-proof property may be increased by enlarging the area of contact or making the pinch portions as a highly stretched portion. In constructing the fuel cartridge 20, the pinch portions 13, 13a and 14 may be clamped or pressed upwardly with ribs 24 of the hard case 21 so that pressure-proof property can be further improved.

### Industrial Utility

This invention can be applied to a fuel bottle for a fuel cell such as a methanol fuel cell and a fuel cartridge using such fuel bottle.

## Claims

1. A fuel bottle for a fuel cell having a bottle main body for containing fuel for a fuel cell and comprising a nozzle portion at the tip portion of the bottle main body on which a coupler for connecting with a main body of a fuel cell can be attached and a trunk portion having a generally elliptic shape in cross section and having been formed by blow molding **characterized in that**
length in one direction of minor axis from the center of the nozzle portion of the elliptic shape in cross section of the trunk portion of the bottle main body differs from length in the other direction of the minor axis from the center of the nozzle portion.

2. A fuel bottle for a fuel cell as defined in claim 1 wherein parting lines at both ends on the side of line of apsides of the elliptic shape of the bottle main body and a pinch portion on the bottom of the bottle main body are disposed substantially at the center of the minor axis offset from the center of the nozzle portion.

3. A fuel bottle for a fuel cell as defined in claim 1 wherein an outwardly protruding projection is formed on the shorter length side from the center of the nozzle portion of the minor axis of the bottle main body.

4. A fuel cartridge for a fuel cell comprising a hard case provided with a push button which can house a fuel bottle as defined in claim 1 and can enable fuel for a fuel cell to flow out by pushing, with the push button, a surface of the fuel bottle on the shorter length side from the center of the nozzle portion.

5. A fuel bottle for a fuel cell as defined in claim 1 wherein a pinch portion is formed in a manner to protrude outwardly.

6. A fuel bottle for a fuel cell as defined in claim 5 wherein the outwardly protruding pinch portion is bent toward the bottle main body.

7. A fuel cartridge for a fuel comprising a hard case provided with a push button and a rib formed on an inside surface of the hard case which can house a fuel bottle as defined in claim 5 in such a manner that at least the pinch portion or a portion in the vicinity of the pinch portion of the fuel bottle is pressed by the rib of the hard case.

8. A fuel cartridge for a fuel comprising a hard case provided with a push button and a rib formed on an inside surface of the hard case which can house a fuel bottle as defined in claim 5 in such a manner that at least the pinch portion or a portion in the vicinity of the pinch portion of the fuel bottle is clamped by the rib of the hard case.

9. A fuel bottle as defined in claim 1, or 5 which is formed to have at least one layer of a cyclic olefin resin.
